Europäisches Patentamt

European Patent Office

Office européen des brevets

(11) Publication number: **0 131 948**
**A2**

# EUROPEAN PATENT APPLICATION

(21) Application number: 84108352.0

(22) Date of filing: 16.07.84

(51) Int. Cl.⁴: **C 08 F 8/44**
**C 08 F 8/38**

(30) Priority: 15.07.83 US 514339

(43) Date of publication of application:
**23.01.85 Bulletin 85/4**

(84) Designated Contracting States:
**AT BE CH DE FR GB IT LI NL SE**

(71) Applicant: UNION CARBIDE CORPORATION
Old Ridgebury Road
Danbury Connecticut 06817(US)

(72) Inventor: Stakem, Francis Gregory
804 Lynwood Street
Raritan New Jersey 08869(US)

(72) Inventor: Rifi, Mahmoud Rashad
28 Dawson Road
Kendall Park New Jersey 08824(US)

(72) Inventor: Noshay, Allen
66 Wellington Road
East Brunswick New Jersey 08816(US)

(74) Representative: Weinhold, Peter, Dr. et al,
Patentanwälte Dr. V. Schmied-Kowarzik Dipl.-Ing. G.
Dannenberg Dr. P. Weinhold Dr. D. Gudel Dipl.-Ing. S.
Schubert Dr. P. Barz Siegfriedstrasse 8
D-8000 München 40(DE)

(54) Sulfochlorinated olefin polymers, ionomers made therefrom and process therefor.

(57) Novel ionomers are formed in a two step process employ-
ing olefin polymers which are first sulfochlorinated to a rela-
tively low sulfur and chlorine content and then neutralized.

EP 0 131 948 A2

## SULFOCHLORINATED OLEFIN POLYMERS,
## IONOMERS MADE THEREFROM AND PROCESS THEREFOR

### Field of the Invention

This invention relates to olefin polymers which have been sulfochlorinated to a relatively low level of chlorosulfonyl groups, to ionomers prepared from such polymers and to a process for preparing such ionomers. More particularly, this invention relates to such sulfochlorinated products as have been prepared in a low pressure gas phase process from porous olefin polymers.

### Background of the Invention

Chlorosulfonated ethylene polymers have been produced by chlorosulfonating the ethylene polymer with $Cl_2$ and $SO_2$ or $SO_2Cl_2$. For commercial purposes, these chlorosulfonated polymers have had, to date, a relatively high level of $Cl_2$ and $SO_2$ in the form of -Cl and -$SO_2$Cl groups, i.e., usually more than about 25 weight % Cl and more than about 0.5 weight % S. Moreover, they also have a relatively high Cl:S ratio, i.e., of more than about 15. These chlorosulfonated polymers are also usually prepared in solution polymerization processes which require the handling and disposition of relatively large volumes of solvent. See in this regard, U.S. Patent 4,145,491.

Sulfonate ionomeric polymers have been prepared from elastomeric olefin polymer feedstocks by the sulfonation of unsaturated sites in these resins with a sulfonating agent such as sulfur

D-13,845

trioxide, followed by neutralization. See in this regard U.S. Patents 3,870,841 and 4,105,647. However, these polymeric feedstocks are essentially non-crystalline amorphous materials. The ionomers prepared therefrom therefore would also be essentially non-crystalline.

U.S. Patent 3,624,054 discloses the preparation of sulfochlorinated polyethylene which contains low amounts of chlorine and sulfur. These polymers, however, have very low sulfur contents and there is no indication in the patent that ionomers could be prepared from such polymers.

Prior to the present invention, it has not been thought possible to prepare useful ionomers in a gas phase process from olefin polymers which have been modified with relatively low levels of chlorine and sulfur, and particularly those having a relatively high ratio of S:Cl.

The term "sulfochlorination", as used herein, means modifying olefin polymers with relative low levels of chlorine and sulfur at a relatively high ratio of S:Cl.

An ionomer is a polymer with pendant ionic groups. These groups aggregate into multiplets which act as ionic crosslinks.

## Objects of the Present Invention

An object of the present invention is to provide novel sulfochlorinated olefin polymers and ionomers prepared therefrom.

Another object of the present invention is to provide a novel process for the production of sulfochlorinated olefin polymers.

D-13,845

A further object of the present invention is to produce a sulfonate ionomeric polymer, i.e., an ionomer, from a partially crystalline polyolefin resin and in which some level of crystallinity is retained in the ionomer.

A still further object of the present invention is to produce ionomers which have an inherent reversible cross-linking system which imparts to the ionomers better tensile strength and solvent resistance properties than are present in the feedstock hydrocarbon polyolefins.

## Summary of the Invention

It has now been found that the objects of the present invention can be readily obtained, in a two step process, if particulate porous olefin polymers are first sulfochlorinated in a gas phase process to produce certain sulfochlorinated resins, as described below, and such sulfochlorinated resins are then treated with an ionomer forming reactant.

## Description of the Preferred Embodiment
### Olefin Polymer

The olefin polymers which are to be used as the starting materials in the two step process described herein are homopolymers or interpolymers produced in a low pressure fluid bed process from one or more $C_2$ to $C_8$ alpha-monoolefins. The polymers should be in the form of a particulate granular material having an average particle size of about 150 to 2000 microns. They should also have a modulus value of about 1000 to 175,000 psi and a crystallinity of about 5 to 80%.

D-13,845

0131948

- 4 -

The homopolymers include polyethylene, polypropylene, polybutene-1 and poly-4-methyl-pentene-1. The interpolymers are random or block copolymers formed from two or more of the olefin monomers. The interpolymers include ethylene-propylene copolymer, ethylene-butene-1 copolymer, ethylene-hexene-1 copolymer, ethylene-propylene-hexene terpolymer, ethylene-butene-hexene terpolymer, propylene-butene-1 copolymer and propylene-4-methyl-pentene-1 copolymer.

The preferred interpolymers which are to be used in the process of the present invention include particulate, porous, crystalline ethylene polymers formed from about 50 to 99, and preferably about 75 to 96, mol % of ethylene and from about 1 to 50, and preferably about 4 to 25, mol % of one or more $C_3$ to $C_8$ alphamonoolefins such as propylene, butene-1, pentene-1, 4-methyl-pentene-1, hexene-1, heptene-1 and octene-1. They would have a density of about 0.87 to 0.95 and preferably of about 0.90 to 0.93. The amount and the chain length of the $C_3$ to $C_8$ comonomers used has a direct bearing on the density of the resulting ethylene interpolymer. The longer the chain length of the $C_3$ to $C_8$ comonomer is, the less of such comonomer is needed to achieve a given density from 0.96 (for the homopolymer) down to 0.87. Therefore, the extreme ratios of the comonomers to be used, in order to obtain a desired density in the range of from 0.93 down to 0.87 would be, a mole ratio of 0.04:1 to 0.35:1 for the ratio of propylene to ethylene, wherein propylene is the $C_3$ to $C_8$ comonomer with

D-13,845

the shortest chain length, and a mole ratio of 0.01:1 to 0.25:1 for the ratio of octene-1 to ethylene, wherein octene-1 is the $C_3$ to $C_8$ comonomer with the longest chain length. The mole ratios of the other $C_3$ to $C_8$ comonomers to be used for this purpose would lie, proportionately, between these ratios for propylene and octene-1.

These olefin homo- and inter-polymers have:

an average particle size of about 150 to 2000, and preferably of about 300 to 1300, microns,

a bulk density of about 10 to 30, and preferably of about 12 to 24,

a porosity or pore volume of about 0.1 to 0.5, and preferably of about 0.2 to 0.4, cc/gram, and

a % crystallinity of about 5 to 90.

These particulate, porous, crystalline olefin homo- and inter-polymers can be prepared in a low pressure (less than or equal to about 1000 psi) gas phase process. They can be so prepared with various Ziegler or Ziegler-Natta type transition metal based catalyst systems. Low pressure gas phase processes for employing such catalysts to produce such polymers are known in the art. The preparation of the preferred ethylene inter-polymers with a process and catalyst of this type is disclosed, for example, in U.S. Patent Application Serial No. 480,296 filed March 28, 1983 in the names of F.J. Karol et al. Other gas phase processes wherein, it is believed, crystalline ethylene interpolymers (in the density range of about 0.87 - 0.93) can be prepared with catalysts of this type are disclosed in U.S. Patents 4,338,424; 4,363,904;

4,370,456 and 4,372,919 and U.K. Patent Applications 2,006,232, 2,033,910, 2,034,336; 2,034,723; 2,036,764 and 2,066,274. Ethylene homopolymers or terpolmers may also be prepared with such catalysts as disclosed for example in U.S. Patents 4,303,771 and 4,383,095 (Re: homopolymers) and U.S. Patents 4,359,561 and 4,363,904 (Re: terpolymers). The ethylene polymers may also be prepared by a low pressure fluid bed process with various Cr compound based catalysts such as chromium trioxide, triphenylsilyl chromate and bis cyclopentadienyl chromium as disclosed for example in U.S. Patents 3,709,853, 4,003,712, 4,011,382 and 4,115,639. The reactor systems disclosed in such patents may also be used for making the other olefin polymers used in the first step of the process of the present invention.

## Two Step Process

The process of the present invention is a two-step process. In the first step the granular olefin polymer is treated with $Cl_2$ and $SO_2$ gases in the gas phase, and in the second step the sulfochlorinated polymer is treated with ionomer forming reactants.

## First Step of the Process

The first step in the process of the present invention is conducted in the gas phase in the absence of solvents or liquid diluents. The preferred of such gas phase processes are the fluidized or agitated bed type processes which can be operated for extended periods of time.

The first step in the process is conducted by treating or reacting the granular crystalline olefin polymer with a sulfochlorinating modifying agent, preferably a mixture of $SO_2$ and $Cl_2$, in the gaseous state under the operating conditions employed until the desired amounts of Cl and S are added to the olefin polymer. The addition of the modifying agents also causes a lowering of the crystallinity and tensile modulus of the starting polymer it is believed, by randomly replacing hydrogen atoms on the polymeric backbone with more bulky groups such as $-SO_2Cl$ and $-Cl$ during the sulfochlorination modification of the crystalline polymer. This disrupts the crystalline order in the olefin polymer.

The time required for this to occur will vary from about 2 to 24 hours depending on the particular crystalline polymer used as the starting material, and temperature and pressure employed in the reaction system, as well as on the particle size, porosity and crystallinity of the olefin polymer.

Thus, the lower the crystallinity, and the greater the porosity and the smaller the particle size of the olefin polymer, the faster will the modification process proceed. The temperature to be used is in the range of about 50 to about 10°C below the melting point of the olefin polymer, and the pressure to be used is in the range of from atmospheric pressure up to about 1000 psi. The pressure should also be one at which none of the reactants or by-products will condense under the

D-13,845

overall reaction condition scheme. The higher the pressure and temperature, the shorter will be the reaction time, if all the other conditions are the same. The sulfochlorination modifying agents that may be used would include either $SO_2$ plus $Cl_2$ or $SO_2Cl_2$ + $SO_2$.

As a result of the sulfochlorination treatment, the backbone of the sulfochlorinated polymers will contain randomly distributed carbon-$SO_2Cl$ bonds and small amounts of carbon-chlorine bonds. In these sulfochlorinated polymers, the total chlorine concentration will range from about 1.7 to 15 weight %, and preferably from about 4 to 6 weight %, and the sulfur content will range from about 1.5 to 7 weight %, and preferably from about 2 to 4 weight %, based on the total weight of the sulfochlorinated polymer. The mol ratio of sulfur to chlorine, as elements, in these polymers will range from about 0.1 to 1.0 and preferably from about 0.25 to 0.9.

The amounts of the $Cl_2$ and $SO_2$ gases to be used in the reactor during the first step of the process relative to the amount of the particulate polymer to be treated therewith is at least 5 weight %. Where $SO_2$ plus $Cl_2$ are used as the modifying agent, the ratio of $SO_2:Cl_2$ used is about 7 to 100 and preferably about 30 to 70, on a volume basis. When $SO_2Cl_2$ and $SO_2$ gases are the combination of modifying agents employed in the first step of the process of the present invention, the amounts of such gases to be used, relative to the amounts of the particulate polymer to be treated therewith is at least 5 weight %. The ratio of $SO_2:SO_2Cl_2$ used is about 6 to 100, and preferably about 2 to 70, on a molar basis. About 10 to 50 volume % of an inert gas such as nitrogen may be used in conjunction with the gaseous modifying agent when the reaction is conducted in the gas phase.

It has been found that because of the physical properties of the olefin polymers selected for use in the process of the present invention, particularly those used in porous particulate form, it is much easier to remove any residual unreacted materials such as modifying agent, or HCl by-product, from the polymer by merely flushing them out with an inert gas such as nitrogen. Since there are no components of the reaction system, other than polymer, modifying agent(s), HCl by-product, and, optionally, inert gas, used in the first step of the process of the present invention, when the process is conducted in the gas phase, such as solvents, diluents, swelling agents, fluidizing agents, or catalysts, there is no need to expend any efforts to remove any materials of these latter types from the sulfochlorinated product. Thus, the sulfochlorinated product may also be used directly, without the need for any post reactor treatment, in the second step of the process of the present invention, when it is made in the gas phase in the first process step.

The sulfochlorinated polymers produced by the first step in the process of the present invention would have the following physical properties:

a tensile strength of about 200 to 3000, and preferably of about 500 to 2000, psi, a tensile modulus, at 23°C, of about 1000 to 50,000, and preferably of about 2000 to 30,000 psi, and an elongation at break of about 50 to 1500, and preferably of about 50 to 1000, %.

## Second Step of the Process

In the second step of the process of the present invention the sulfochlorinated polymers produced in the first step, as described above, are treated, or reacted, with a neutralizing agent which is basic in nature and which neutralizes the $-SO_2Cl$ groups on the polymeric backbone of the sulfochlorinated polymer. "Neutralization", as used herein, refers to hydrolysis of the sulfonyl chloride groups and neutralization of the resulting sulfonic acid. The neutralizing agent is used in such amounts as to neutralize at least 30, and preferably at least 90,% of the $-SO_2Cl$ groups present in the polymer. This reaction is conducted at a temperature of about 25 to 170, and preferably of about 70 to 160,°C. This usually takes about 3 to 100 minutes. The reaction is conducted under a pressure of about 15 to 100 psia in a slurry, or solution, or fluxed melt of the polymer. Where a solvent is used it may be a hydrocarbon, chlorinated or polar solvent. About 1 to 5 mols of the neutralizing agent are used per mol of $-SO_2Cl$ group of the polymer being treated.

The neutralization agents which can be employed are well known in the art and include the hydroxides, alkoxides, carbonates and bicarbonates of ammonia, lithium, sodium, potassium, rubidium, cesium, magnesium, calcium and zinc. Calcium is the preferred cation. Small amounts of water may also be added to the reaction system to assist in the neutralization reaction.

To assist in the neutralization process of the second step of the process of the present invention this step of the process may also be conducted in the presence of an ionalyzer and a stabilizer if the reaction is conducted in a melt flux, or in the presence of a phase transfer catalyst (emulsifier) if the process is conducted as a two-phase solution system, as is known in the art.

These ionalyzers and stabilizers are well known in the art of ionomer forming neutralization reactions. These ionalyzers would include zinc stearate, and calcium stearate, and they are employed to improve the melt processability of the ionomers. The ionalyzers are used in amounts of about 5 to 10 weight % based on the amount of resin present in the reaction system. The stabilizers would include epoxidized soybean oil, stearates and HCl scavengers. The stabilizers are used in amounts of about 0.5 to 1.0 weight % based on the amount of resin present in the reaction system.

The resulting ionomers produced in the second step of the process of the present invention would have the following physical properties:

a tensile strength of about 500 to 5000, and preferably of about 900 to 4000, psi,

a tensile modulus, at 23°C, of about 1000 to 50,000, and preferably of about 2000 to 30,000, psi,

D-13,845

an elongation at break of about 10 to 1500, and preferably of about 30 to 700, %,

a $T_2$ of at least 5 to 150°C and preferably at least 25 to 50°C greater than that of the sulfochlorinated feedstock resin and the starting ethylene polymer, and

a retained degree of crystallinity of about 2 to 60, and preferably of about 8 to 30,%.

The properties of the polymers discussed herein were determined by the following test methods:

| | |
|---|---|
| Density | ASTM 1505 - A plaque is made and conditioned for one hour at 100°C to approach equilibrium crystallinity. Measurement for density is then made in a density gradient column. |
| Melt Index (MI) | ASTM D-1238 - Condition E - Measured at 190°C - reported as grams per 10 minutes. |
| Pore Volume | ASTM C-699-108 (45) |
| Average Particle Size | This is calculated from sieve analysis data measured according to ASTM-D-1921 Method A using a 500 g sample. Calculations are based on weight fractions retained on the screens. |
| Bulk Density | The resin is poured via 3/8" diameter funnel into a 100 ml graduated cylinder to |

D-13,845

100 ml line without shaking the cylinder, and weighed by difference.

Crystallinity and melting point — Measured by Differential Scanning Calorimeter (DSC) using a DuPont-990 analyzer with pressure DSC cell

Tensile Modulus (psi) — 1% secant modulus; a film 4" x 4" x 0.020" is compression molded at 130-150°C. and its modulus is measured according to ASTM-638.

Tensile Strength (psi) — A similar film, prepared as described above for tensile modulus, is tested according to ASTM-638.

% Elongation at Break — A similar film, prepared as described above for tensile modulus and tensile strength, is elevated according to ASTM-638.

$T_2$ — The temperature, in °C, at which the tensile modulus of the test sample is equal to 100 psi, i.e., $1 \times 10^2$ psi.

The following Examples are provided to illustrate the process and products of the present invention and are not intended as a limitation upon the scope thereof.

## Apparatus/Process - For Gas Phase First Step Process

Ethylene polymers were sulfochlorinated in the first step, in the gas phase, in a three-liter three-necked glass flask equipped with a mechanical stirrer, gas dispersion tube and thermometer. The apparatus was charged with the desired amount of ethylene polymer and immersed in an oil bath held at the desired temperature (60-105°C). The sulfur dioxide and chlorine gases were metered via a flowmeter, premixed and admitted to the vessel through the gas dispersion tube. The unreacted gases and gaseous byproduct HCl were swept through a modified thermometer well and into an aqueous sodium hydroxide trap. The reaction was stirred and allowed to proceed until the desired mass gain of the apparatus indicated that a certain sulfur level had been reached (4-30 hours). (Previous experiments had defined the percentage of mass gained that was attributable to sulfur.) The flask and contents were cooled and purged with dry nitrogen. A sample of product was submitted for various tests if desired and the remainder was used for ionomer formation in the second step.

## Apparatus/Process for Second Step Sulfochlorination Process

Two alternative procedures were used for the second step.

### Procedure A - In Solution

Fifty (50) grams of the sulfochlorinated resin prepared in the first step was charged into a one liter three-necked resin kettle containing 700 ml of chlorobenzene (CB) or dichlorobenzene (DCB)

D-13,845

and about 9 grams of the neutralizing agent, which was sodium hydroxide (NaOH), zinc acetate [Zn(OAc)$_2$] or calcium acetate [Ca(OAc)$_2$], and 40 ml of distilled water. The kettle was fitted with a thermometer, mechanical stirrer and air condenser. The apparatus was immersed in an oil bath and heated to 90 to 100°C for 1 to 4 hours with continuous stirring. The resulting product mix was then cooled and poured into one liter of acetone in a Waring blender and mixed for 2 minutes. The product was washed twice with acetone in this manner and filtered. After being dried under vacuum at 70°C overnight, the resulting resin product was melt fluxed with an ionalyzer (if necessary to facilitate melt processability) and analyzed.

Procedure B - In Melted Flux

Forty (40) grams of the sulfochlorinated resin prepared in the first step, about 2 grams of neutralizing agent, 1.25 grams of zinc stearate and 0.2 grams of epoxidized soybean oil were thoroughly mixed and charged to a Brabender melt mixer heated at 160°C. The mixture was fluxed for 2 minutes and then removed. Infrared analysis of the products showed that the -SO$_2$Cl groups has been transformed to -SO$^-$ groups, indicative of ionic structure.

Examples 1-4

In these examples 150 grams of low pressure ethylene-propylene or ethylene-butene-1 copolymers were sulfochlorinated in the gas phase with SO$_2$ and Cl$_2$ at atmospheric pressure in the first process step of the present invention in the apparatus described above under the following

D-13,845

conditions, to produce sulfochlorinated products having the following properties:

| | Examples | | | |
|---|---|---|---|---|
| Reaction Conditions | 1 | 2 | 3 | 4 |
| Time, hours | 20 | 13 | 15 | 18 |
| Temperature, °C | 105 | 60 | 60 | 60 |
| $SO_2/Cl_2$ feed (by volume) | 15 | 15 | 15 | 30 |

| | Examples | | | |
|---|---|---|---|---|
| Starting Copolymer Properties | 1 | 2 | 3 | 4 |
| Particle size, μ (APS) | 500 | 500 | 500 | 500 |
| Density | 0.924 | 0.894 | 0.894 | 0.874 |
| Melt index | 12 | 1.1 | 1.1 | 1.5 |
| Crystallinity, % | 54.5 | 21 | 21 | 13 |
| Tensile modulus, psi | 45,300 | 8900 | 8900 | 1160 |
| Tensile strength, psi | 1570 | 840 | 840 | 290 |
| Elongation at break, % | 460 | 800 | 800 | 920 |
| Mol % butene content | 2.4 | 9.2 | 9.2 | -- |
| Mol % propylene content | -- | -- | -- | 15.8 |
| Porosity, cc/gram | 0.30 | 0.32 | 0.32 | 0.37 |
| Bulk density, lbs/ft$^3$ | 27 | 23 | 23 | 21 |
| $T_2$, °C | 120 | 102 | 102 | 83 |

D-13,845

|  | Examples | | | |
| --- | --- | --- | --- | --- |
|  | 1 | 2 | 3 | 4 |
| Suflochlorinated Product Properties |  |  |  |  |
| Crystallinity, % | 31.8 | 19.7 | 17.1 | 16.2 |
| Tensile modulus, psi | 23,700 | 3700 | 3170 | – |
| Tensile strength, psi | 1860 | 1150 | 300 | – |
| Elongation at break, % | 1000 | 631 | 64 | – |
| Pendulum impact ft lbs/in | >269 | >210 | 141 | – |
| S content, wt % | 1.77 | 3.20 | 3.86 | 2.29 |
| Cl content, wt % | 4.57 | 5.40 | 6.0 | 3.52 |
| S:Cl mole ratio | 0.43 | 0.45 | 0.71 | 0.75 |
| $T_2$, °C | 112 | 116 | 103 | -- |

Examples 5-8

In these examples the sulfochlorinated polymers produced in Examples 1-4, respectively, were neutralized, in 700 ml of solvent to produce ionomers, in the apparatus described above under the following conditions to produce ionomers having the following properties:

D-13,845

| | Examples | | | |
|---|---|---|---|---|
| | 5 | 6 | 7 | 8 |
| **Reaction Conditions** | | | | |
| Temperature, °C | 100 | 95 | 95 | 90 |
| Time, hours | 1 | 1.5 | 1.5 | 5 |
| Reagent | NaOH | NaOH | NaOH | $Ca(OAc)_2$ |
| Solvent | DCB | DCB | DCB | CB |
| Efficiency of neutralization, % | 100 | 100 | 100 | 100 |
| Weight % cation | 1.0 | 2.02 | 3.46 | 1.50 |
| Cation | $Na^+$ | $Na^+$ | $Na^+$ | $Ca^{+2}$ |

| | Examples | | | |
|---|---|---|---|---|
| | 5 | 6 | 7 | 8 |
| **Ionomer Product Properties** | | | | |
| Tensile modulus, psi | 24,200 | 4790 | 14,100 | 1810 |
| Tensile strength, psi | 3800 | 2150 | 1290 | 950 |
| Elongation at break, % | 478 | 650 | 27 | 202 |
| Pendulum impact ft lbs/in | >213 | >239 | 75 | 131 |
| $T_2$, °C | 125 | 144 | >250 | 190 |
| Crystallinity, % | 28.3 | 15 | 11.5 | 8.3 |

0131948

## Example 9

Weighed strips of the ionomer prepared in Example 5 were placed in three test tubes containing 3 ml of the solvents indicated in the table below. A set of controls using weighed strips of the ethylene-butene-1 copolymer used in Example 1, which was the starting material used to prepare the ionomer prepared in Example 5, was also prepared in like manner. All the test tubes were then immersed in an oil bath at 85-90°C for one hour. The resins were then removed from the solvents in which they were immersed, dried in vacuo, and reweighed. The percent of the resins which dissolved is also given in the table below. All the ionomer samples swelled but none dissolved, although they were all slightly soluble.

| Solvent Used | Weight, Grams, of Ionomer Sample | | Ionomer Solubility, % by wt | Weight, Grams, of Control Sample | | Control Solubility, % by wt |
|---|---|---|---|---|---|---|
| | Before | After | | Before | After | |
| heptane | 0.0501 | 0.0481 | 4.0 | 0.0563 | dissolved | 100 |
| dichloro-benzene | 0.0612 | 0.0593 | 3.1 | 0.0467 | dissolved | 100 |
| toluene | 0.0631 | 0.0581 | 7.9 | 0.0593 | dissolved | 100 |

The ionomeric resin sample remaining after being tested in the dichlorobenzene solvent was then molded at 200°C into a thin film indicating that it was not irreversibly crosslinked.

The ionomers of the present invention may also be characterized as thermoplastic elastomers. They may be used for general molding purposes, for the soles of footware and for tray electrical cable insulation.

## Claims

1. A sulfonate ionomer of a partially crystalline olefin polymer having a degree of crystallinity of at least about 2 to 60%, e.g. of at least about 8 to 30%.

2. An ionomer as in claim 1 of a homopolymer or an interpolymer of one or more $C_2$ to $C_8$ alpha monoolefins.

3. An ionomer as in one or both of the claims 1 - 2 of a granular porous olefin polymer having a pore volume of at least 0.1 cc/gram.

4. Sulfochlorinated olefin polymer having a sulfur content of about 1.5 to 7 weight %, e.g. of about 2 to 4 weight %, and a chlorine content of about 1.7 to 15 weight %, e.g. of about 4 to 6 weight %.

5. Sulfochlorinated olefin polymer as in claim 4 wherein said olefin polymer has an ethylene content of at least 50 mol % and a $C_3$ to $C_8$ alpha monoolefin content of $\geq 0$ to 50 mol %.

6. Sulfochlorinated olefin polymer as in claim 5 wherein said ethylene polymer is a copolymer having an ethylene content of about 75 to 96 mol % and a $C_3$ to $C_8$ alpha monoolefin content of about 4 to 25 mol %.

7. Sulfochlorinated olefin polymer as in claim 6 wherein said ethylene polymer has a density of about 0.87 to 0.96.

8.    An ionomer of a polymer of one or more of the claims 4 - 7.

9.    An ionomer of a polymer of claim 6 having a tensile strength of at least about 500 psi.

10.    An ionomer as in claim 6 having a retained degree of crystallinity of at least about 2 to 60% , e.g. of at least about 8 to 30 %.

11.    A sulfonate /ionomer of a partially crystalline olefin polymer wherein said olefin polymer is a granular porous olefin polymer having a pore volume of at least 0.1 cc/gram and containing at least 50 mol% of ethylene and $\geq$ 0 to 50 mol % of one or more $C_3$ to $C_8$ alpha monoolefins, and said ionomer has a retained degree of crystallinity of at least about 2 to 60% and a tensile strength of at least about 500 psi.

12.    A sulfonate ionomer as in claim 11 wherein said olefin polymer contains about 75 to 96 mol% of ethylene and about 4 to 25 mol % of one or more $C_3$ to $C_8$ alpha monoolefins.

13.    An ionomer as in one or more of the claims 1 - 12 wherein the ionomer is formed with a cation selected from the group consisting of calcium ammonium, cesium, lithium, magnesium, potassium, rubidium, sodium, /and zinc ions and preferably an ion of calcium.

14. A process for preparing a
sulfochlorinated olefin polymer which comprises
sulfochlorinating granular porous crystalline olefin
polymer in the gas phase at a temperature of about
50°C up to 10°C below the melting point of said
polymer and at a positive pressure of$\leq$ 1000 psi
for a period of time sufficient to provide said
polymer with a sulfur content of about 1.5 to 7
weight % and a chlorine content of about 1.7 to 15
weight %.

15. A process as in claim 14 wherein
said olefin polymer has an ethylene content of at
least 50 mol %, e.g. of about 75 to 96 mol %,
and a $C_3$ to $C_8$ alpha monoolefin content of$\geq$ 0 to
50 mol %, e.g. of about 4 to 25 mol %.

16. The process as in  one or both of
the claims 14 - 15 which comprises the additional
step of treating said sulfochlorinated olefin polymer
with an ionomer forming reactant so as to neutralize
at least about 30 % of the $-SO_2Cl$ groups present
in said sulfochlorinated olefin polymer.

17. A process as in claim 16 in which said
ionomer forming reactant contains a cation selected
from the group consisting of ammonium, calcium,
cesium, lithium, magnesium, potassium, rubidium,
sodium and zinc ions, and preferably an ion of
calcium.

18. A process for preparing ionomeric
sulfochlorinated olefin polymer which comprises
        a)    sulfochlorinating granular porous
crystalline olefin polymer with $SO_2$ and $Cl_2$ in a

gaseous phase at a temperature of from 50°C up to 10°C below the melting point of said polymer and at a positive pressure of $\leq$ 1000 psi with $SO_2$ and $Cl_2$ in ratio, by volume, of $SO_2:Cl_2$ of about 7 to 100 for a period of time sufficient to produce an ethylene polymer having a sulfur content of about 1.5 to 7 weight % and a chlorine content of about 1.7 to 15 weight %, and

b)    reacting the sulfochlorinated olefin polymer formed in step a) with an ionomer forming reactant until at least about 30% of the $-SO_2Cl$ groups of said sulfochlorinated olefin polymer are converted into ionomeric form.

19.    A process as in claim 20 wherein said olefin polymer has an ethylene content of at least 50 mol %, e.g. of about 75 to 96 mol % and a $C_3$ to $C_8$ alpha monoolefin content of $\geq$ 0 to 50 mol %, e.g. of about 4 to 25 mol %.

20.    Ionomeric sulfochlorinated olefin polymer having a $T_2$ which is at least 5 to 150°C higher than the $T_2$ of the olefin polymer or sulfochlorinated olefin polymers from which it is prepared.